# EUROPEAN PATENT SPECIFICATION

(11) **EP 3 905 652 B1**
(45) Date of publication and mention of the grant of the patent: **31.05.2023**
(21) Application number: 20748614.3
(22) Date of filing: 16.01.2020
(51) Int. Cl.: H04M 3/42

(54) **VIDEO RINGBACK TONE INTERACTION METHOD AND APPARATUS**
VIDEORÜCKRUFTONINTERAKTIONSVERFAHREN UND -VORRICHTUNG
PROCÉDÉ ET APPAREIL D'INTERACTION DE TONALITÉ DE RETOUR D'APPEL VIDÉO

(30) Priority: 29.01.2019 CN 201910087541
(43) Date of publication of application: 03.11.2021
(73) Proprietor: Huawei Technologies Co., Ltd., Longgang District, Shenzhen, Guangdong 518129 (CN)
(72) Inventor: TAN, Yinyan, Shenzhen, Guangdong 518129 (CN)
(74) Representative: Epping - Hermann - Fischer
(86) International application number: PCT/CN2020/072470
(87) International publication number: WO 2020/156206

(56) References cited:
- WO-A1-2018/006807
- CN-A- 101 141 521
- CN-A- 106 303 104
- CN-A- 106 713 679
- CN-A- 109 104 618

## Description

### TECHNICAL FIELD

This application relates to the multimedia field, and in particular, to a video ring back tone interaction method and an apparatus.

### BACKGROUND

With development of technologies, a user may use a new service such as a video ring back tone. The video ring back tone is a video clip that a calling user can see on a display when calling a called user. The user may perform an interactive operation on the video ring back tone. This improves call waiting experience.

In the prior art, during playing of the video ring back tone, after the user performs an operation (for example, performs a tap operation on a link in a display interface of a terminal), playing of the current video ring back tone is immediately stopped, and the user's interactive operation is responded to.

However, because the called user may answer at any time during interaction between the calling user and the video ring back tone, if the calling user has a time-consuming interaction requirement for the video ring back tone (for example, accesses a shopping website to purchase a corresponding product in the video ring back tone), the interaction between the calling user and the video ring back tone may be interrupted at any time, or the called user needs to wait for completion of the calling user's interactive operation. This degrades user experience of both parties of a call. CN106713679A discloses a method for pushing coloring ring back tone business. The method comprises the following steps: receiving a call request of a caller user, and calling a called user according to the call request; before the called user answers or before the call waiting time reaches the maximum call waiting time, playing customized coloring ring back tone of the caller user or the called user to the caller user; when the playing time of the customized coloring ring back tone reaches a first preset time, pausing playing the customized coloring ring back tone, and playing pushed coloring ring back tone of a caller operator or a called operator to the caller user; and when the playing time of the pushed coloring ring back tone reaches a second preset time, stopping playing the pushed coloring ring back tone, and re-playing the customized coloring ring back tone to the caller user.

### SUMMARY

Embodiments of this application provide a video ring back tone interaction method and an apparatus, so as to resolve a problem of poor experience of interaction with a video ring back tone caused by an uncertain answer time.

Specifically, according to this application, a calling user's interactive operation may be responded to after a call is completed. This avoids that interaction between the calling user and a video ring back tone is interrupted, or that a called user is forced to wait for completion of the calling user's interactive operation, thereby resolving the problem of poor experience of interaction with a video ring back tone caused by an uncertain answer time, and bringing experience of smooth and continuous interaction with a video ring back tone.

According to a first aspect, an embodiment of this application provides a video ring back tone interaction method, including: A calling terminal initiates a call to a called terminal. The calling terminal displays a video ring back tone on a display, where the video ring back tone includes at least one interactive element. The calling terminal receives a user's first interactive operation performed on a first interactive element, where the first interactive element is any one of the at least one interactive element. The calling terminal caches first interactive resource data corresponding to the first interactive element. When the calling terminal determines that a call status is an idle state, the calling terminal responds based on the first interactive resource data, wherein the call status is the idle state after a call ends, wherein the responding based on the first interactive resource data comprises displaying the first interactive resource data in a corresponding manner based on a type of the cached first interactive resource data.

According to the method provided in this application, after receiving the user's interactive operation (the first interactive operation performed on the first interactive element) during playing of the video ring back tone, the calling terminal cashes corresponding interactive resource data (the first interactive resource data), and respond based on the interactive resource data after the call ends (that is, when the call status is the idle state), thereby ensuring continuity of interaction between the calling user and the video ring back tone without affecting normal progress of the call. For a called user, the call also does not need to be postponed due to the caller's interaction with the video ring back tone, thereby resolving a problem of poor experience of interaction with a video ring back tone caused by an uncertain answer time. In addition, for a video ring back tone operator, the caller's interaction with the video ring back tone is not necessarily limited to a short period of time existing before the callee answers, and re-diversion is performed after the call ends, thereby increasing a completion rate of interaction with the video ring back tone.

In a possible implementation, the first interactive element corresponds to a first uniform resource locator (uniform resource locator, URL), and that the calling terminal caches first interactive resource data includes: The calling terminal sends a first request message to a server corresponding to the first URL, where the first request message is used to request the first interactive resource data. The calling terminal receives a first response message sent by the server corresponding to the first URL, where the first response message includes the first interactive resource data. The calling terminal caches the first interactive resource data.

In other words, the first interactive resource data is requested by the calling terminal from the server corresponding to the first URL, and the first interactive resource data may be cached in a terminal device. In this way, the calling terminal may respond based on the interactive resource data after the call ends (that is, when the call status is the idle state), thereby ensuring continuity of interaction between the calling user and the video ring back tone without affecting normal progress of the call. For the called user, the call also does not need to be postponed due to the caller's interaction with the video ring back tone, thereby resolving a problem of poor experience of interaction with a video ring back tone caused by an uncertain answer time.

In a possible implementation, the method further includes: The calling terminal sends an interaction result report message to a first server, where the interaction result report message includes at least one of an identifier (ID) of the video ring back tone, an ID of the calling terminal, an ID of the called terminal, an ID of the first interactive element, and information about execution of the first interactive operation and the first interactive resource data, so that the first server can collect statistics based on the received interaction result report message. For example, the first server collects statistics on a quantity of times each video ring back tone is tapped, a tap rate of each video ring back tone, a completion rate of interactive resource data, interaction information of a calling user (what interactive operations were performed on which interactive elements), and the like within a period of time. This helps a video ring back tone operator or service provider run business.

In a possible implementation, that the calling terminal determines that a call status is an idle state includes: The calling terminal learns, through monitoring, that the local call status is the idle state; or the calling terminal receives a notification message, where the notification message is used to indicate that the local call status is the idle state. For example, after receiving, by using a call module, a BYE message indicating that the called user hangs up, the calling terminal can determine that the call status is the idle state.

In a possible implementation, the first interactive resource data is determined based on the ID of the video ring back tone and the ID of the first interactive element. Alternatively, the first interactive resource data is determined based on the ID of the video ring back tone, the ID of the first interactive element, and information about the calling terminal, that is, the first interactive resource data may be customized for a user based on the ID of the video ring back tone, the ID of the first interactive element, and the information about the calling terminal. This can improve user experience.

In a possible implementation, the first interactive resource data includes at least one of a text file, a graphic file, a sound file, an animation file, or a video file. The text file may be, for example, registration information, the graphic file may be, for example, a coupon, and the video file may be, for example, a movie trailer.

In a possible implementation, that the calling terminal responds based on the first interactive resource data includes: The calling terminal opens at least one of the text file, the graphic file, the sound file, the animation file, or the video file in a corresponding opening manner. For example, if interactive resource data is a text file, for example, a phone number, a call application program (application, App) may be displayed, and the phone number may be entered; if interactive resource data is a picture file, for example, a coupon, the picture file may be opened by a picture app; or if interactive resource data is a video file, the video file may be opened by a video player. Because the calling terminal responding based on the first interactive resource data is performed when the calling terminal is in the idle state, the call between the calling terminal and the called terminal is not affected, and the following situation does not occur: Continuity of interaction between the calling user and the video ring back tone is interrupted because the called terminal may answer at any time. For the called user, the call also does not need to be postponed due to the caller's interaction with the video ring back tone, thereby resolving a problem of poor experience of interaction with a video ring back tone caused by an uncertain answer time.

In a possible implementation, before the calling terminal displays the video ring back tone on the display, the method further includes: The calling terminal receives video ring back tone media negotiation information sent by a ring back tone platform. The calling terminal determines a video media negotiation result based on the video ring back tone media negotiation information and media capability information of the calling terminal. The calling terminal sends the video media negotiation result to the ring back tone platform, where the video media negotiation result is to be used by the ring back tone platform for playing the video ring back tone.

The video media negotiation result includes but is not limited to information about a video ring back tone media supported by the calling user equipment, an internet protocol (internet protocol, IP) address at which the calling user equipment receives a video media, information about a video channel port, and video encoding/decoding information. According to a second aspect, an example useful for understanding the invention provides a video ring back tone interaction method, including: A first server receives a first request message from a calling terminal, where the first request message is used to request first interactive resource data corresponding to a first interactive element of a video ring back tone. The first server sends a first response message to the calling terminal, where the first response message includes the first interactive resource data; and the first interactive resource data is determined based on an ID of the video ring back tone and an ID of the first interactive element, or the first interactive resource data is determined based on an ID of the video ring back tone, an ID of the first interactive element, and information about the calling terminal. In a possible implementation, the method further includes: The first server receives an interaction result report message from the calling terminal, where the interaction result report message includes at least one of the ID of the video ring back tone, an ID of the calling terminal, an ID of a called terminal, the ID of the first interactive element, and information about execution of a first interactive operation and the first interactive resource data.

For technical effects of the second aspect and the possible implementations of the second aspect, refer to technical effects of the first aspect and the possible implementations of the first aspect, and details are not described herein again.

According to a third aspect, an embodiment of this application provides a calling terminal, including: a calling unit, configured to initiate a call to a called terminal; a display unit, configured to display a video ring back tone on a display, where the video ring back tone includes at least one interactive element; a receiving unit, configured to receive a user's first interactive operation performed on a first interactive element, where the first interactive element is any one of the at least one interactive element; a caching unit, configured to cache first interactive resource data corresponding to the first interactive element; and a processing unit, configured to respond based on the first interactive resource data when determining that a call status is an idle state, wherein the call status is the idle state after a call ends, wherein the responding based on the first interactive resource data comprises displaying the first interactive resource data in a corresponding manner based on a type of the cached first interactive resource data.

In a possible implementation, the first interactive element corresponds to a first URL, and the caching unit is configured to: send, by using a sending unit, a first request message to a server corresponding to the first URL, where the first request message is used to request the first interactive resource data; receive, by using the receiving unit, a first response message sent by the server corresponding to the first URL, where the first response message includes the first interactive resource data; and cache the first interactive resource data.

In a possible implementation, the sending unit is further configured to send an interaction result report message to a first server, where the interaction result report message includes at least one of an ID of the video ring back tone, an ID of the calling terminal, an ID of the called terminal, an ID of the first interactive element, and information about execution of the first interactive operation and the first interactive resource data.

In a possible implementation, the processing unit is configured to: learn, through monitoring, that the local call status is the idle state; or receive a notification message by using the receiving unit, where the notification message is used to indicate that the local call status is the idle state.

In a possible implementation, the first interactive resource data is determined based on the ID of the video ring back tone and the ID of the first interactive element. Alternatively, the first interactive resource data is determined based on the ID of the video ring back tone, the ID of the first interactive element, and information about the calling terminal. In a possible implementation, the first interactive resource data includes at least one of a text file, a graphic file, a sound file, an animation file, or a video file.

In a possible implementation, the processing unit is configured to open at least one of the text file, the graphic file, the sound file, the animation file, or the video file in a corresponding opening manner.

In a possible implementation, the receiving unit is further configured to receive video ring back tone media negotiation information sent by a ring back tone platform; the processing unit is further configured to determine a video media negotiation result based on the video ring back tone media negotiation information and media capability information of the calling terminal; and the sending unit is further configured to send the video media negotiation result to the ring back tone platform, where the video media negotiation result is to be used by the ring back tone platform for playing the video ring back tone.

According to a fourth aspect, an example useful for understanding the invention provides a first server, including: a receiving unit, configured to receive a first request message from a calling terminal, where the first request message is used to request first interactive resource data corresponding to a first interactive element of a video ring back tone; and a sending unit, configured to send a first response message to the calling terminal, where the first response message includes the first interactive resource data; and the first interactive resource data is determined based on an ID of the video ring back tone and an ID of the first interactive element, or the first interactive resource data is determined based on an ID of the video ring back tone, an ID of the first interactive element, and information about the calling terminal. In a possible implementation, the receiving unit is further configured to receive an interaction result report message from the calling terminal, where the interaction result report message includes at least one of the ID of the video ring back tone, an ID of the calling terminal, an ID of a called terminal, the ID of the first interactive element, and information about execution of a first interactive operation and the first interactive resource data.

According to a fifth aspect, a communications apparatus is provided, including a processor and a memory. The memory is configured to store a computer executable instruction. When the communications apparatus runs, the processor executes the computer executable instruction stored in the memory, so that the communications apparatus performs the video ring back tone interaction method according to any one of any foregoing aspect.

According to a sixth aspect, a communications apparatus is provided, including a processor. The processor is configured to: be coupled to a memory; and after reading an instruction in the memory, perform, according to the instruction, the video ring back tone interaction method according to any one of any foregoing aspect.

According to a seventh aspect, a computer readable storage medium is provided. The computer readable storage medium stores an instruction. When the instruction runs on a computer, the computer is enabled to perform the video ring back tone interaction method according to any one of any foregoing aspect.

According to an eighth aspect, a computer program product including an instruction is provided. When the instruction runs on a computer, the computer is enabled to perform the video ring back tone interaction method according to any one of any foregoing aspect.

According to a ninth aspect, a circuit system is provided. The circuit system includes a processing circuit, and the processing circuit is configured to perform the video ring back tone interaction method according to any one of any foregoing aspect.

According to a tenth aspect, a chip is provided. The chip includes a processor, the processor is coupled to a memory, and the memory stores a program instruction. When the program instruction stored in the memory is executed by the processor, the video ring back tone interaction method according to any one of any foregoing aspect is implemented. According to an eleventh aspect, a communications system is provided. The communications system includes the calling terminal in the third aspect and the first server in the fourth aspect.

### BRIEF DESCRIPTION OF DRAWINGS

FIG. 1 is a schematic diagram of a system architecture applicable to a video ring back tone interaction method according to an embodiment of this application;
FIG. 2 is a schematic structural diagram of a calling terminal according to an embodiment of this application;
FIG. 3 is a schematic structural diagram of a first server according to an embodiment of this application;
FIG. 4A and FIG. 4B are a schematic diagram of information exchange applicable to a video ring back tone interaction method according to an embodiment of this application;
FIG. 5(a) and FIG. 5(b) are a schematic diagram of a design of displaying a video ring back tone by a calling terminal according to an embodiment of this application;
FIG. 6 is a schematic diagram of another design of displaying a video ring back tone by a calling terminal according to an embodiment of this application;
FIG. 7 is a schematic structural diagram of another calling terminal according to an embodiment of this application; and
FIG. 8 is a schematic structural diagram of another first server according to an embodiment of this application.

### DESCRIPTION OF EMBODIMENTS

The following describes the technical solutions in the embodiments of this application with reference to the accompanying drawings in the embodiments of this application. In the descriptions of this application, unless otherwise specified, "at least one" means one or more, and "a plurality of means two or more. In addition, to clearly describe the technical solutions in the embodiments of this application, words such as "first" and "second" are used in the embodiments of this application to distinguish between same or similar items that have basically same functions and roles. A person skilled in the art may understand that the words such as "first" and "second" do not limit a quantity and an execution order, and the words such as "first" and "second" do not limit a definite difference either.

The embodiments of this application provide a video ring back tone interaction method and an apparatus, which are applied to a mobile communication scenario, that is, a scenario in which a calling terminal calls a called terminal by using a phone number, or may be applied to an internet communication scenario, that is, a scenario in which a calling terminal calls a called terminal by using network telephony software or other social software.

In the embodiments of this application, the calling terminal initiates a call to the called terminal, and when the calling terminal waits for the called terminal to respond to the call from the calling terminal, the calling terminal displays a video ring back tone on a display, where the video ring back tone includes at least one interactive element. The calling terminal may receive a user's first interactive operation performed on a first interactive element, where the first interactive element is any one of the at least one interactive element. The calling terminal may not immediately respond to the user's first interactive operation, and instead, may cache first interactive resource data corresponding to the first interactive element. When the calling terminal determines that a call status is an idle state (that is, when a called user proactively hangs up after a call, or when the calling user proactively hangs up), the calling terminal then responds based on the first interactive resource data. In other words, according to this application, the calling user's first interactive operation may be responded to after the users' call is completed. This avoids that interaction between the calling user and the video ring back tone is interrupted, or that the called user is forced to wait for completion of the calling user's interactive operation, thereby resolving a problem of poor experience of interaction with a video ring back tone caused by an uncertain answer time, and bringing experience of smooth and continuous interaction with a video ring back tone.

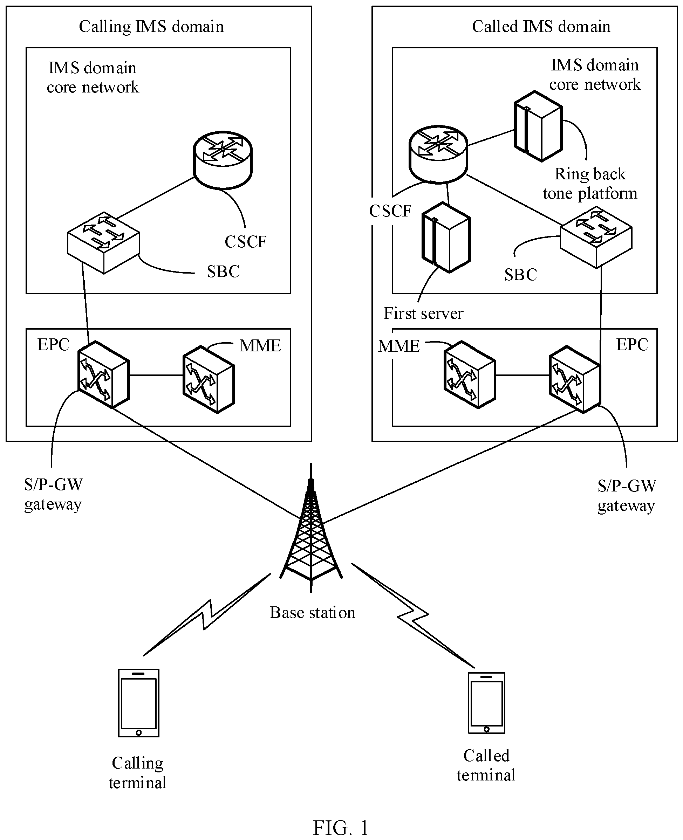

FIG. 1 is a schematic diagram of an architecture applicable to a video ring back tone interaction method according to an embodiment of this application. The architecture includes a calling terminal, a called terminal, an access network device (for example, a base station), a core network, a first server, and a ring back tone platform. The core network may use an evolved packet core (evolved packet core, EPC) network as a bearer, and use an IP multimedia subsystem (IP multimedia subsystem, IMS) as a service control layer architecture, to provide users with integrated services such as voice and multimedia services on the EPC network. As an important telecommunication value-added service platform, the ring back tone platform may include a ring back tone application server (ring back tone application server, RBT AS) and a ring back tone media resource server (ring back tone media resource server, RBT MRS). It should be noted that the RBT AS and the RBT MRS may be separate entities, or may be integrated together, are two modules independent of each other logically, and are located on a called IMS domain core network side.

In the architectural diagram shown in FIG. 1, a calling IMS domain may include a calling IMS domain core network and an EPC. The calling IMS domain core network may include a call session control function (call session control function, CSCF) and a session border control (session border controller, SBC). The EPC may include a serving gateway (serving gateway, S-GW), a packet data network gateway (P-GW), and a mobility management entity (MME). The S-GW and the P-GW may be collectively referred to as an S/P-GW.

In addition to the foregoing described network elements in the calling IMS domain, a called IMS domain may further include the ring back tone platform (the RBT AS and the RBT MRS) and the first server. It should be noted that the foregoing description does not constitute a limitation on a system architectural diagram in this embodiment of the present invention, and the system architectural diagram in this embodiment of the present invention includes but is not limited to the diagram shown in FIG. 1.

The following briefly describes some key network elements mentioned above.

CSCF: is a central node of an IMS core network, and is mainly used for user registration, authorization control, session routing and service trigger control, session status information maintenance, and the like.

SBC: provides secure access and media processing.

MME: is a core device of an EPC network, and provides a function of an MME logical entity.

S/P-GW: is a core device of an EPC network, and provides a function of an S-GW logical entity and a function of a P-GW logical entity.

RBT AS/RBT MRS: On a signaling plane, an RBT AS is connected to a CSCF on an IMS core network, and is responsible for connecting a callee during a ring back tone call. On a media plane, an RBT MRS is connected to an SBC, and is used to trigger ring back tone playing.

First server: is used to store interactive resource data corresponding to an interactive element of a video ring back tone, and may select, according to a request message from a calling terminal, interactive resource data that meets a condition, and provide the interactive resource data to the calling terminal.

A process of triggering a SIP route of a ring back tone in an IMS domain is briefly described as follows: Triggering a ring back tone in the IMS domain mainly follows a principle of triggering in a called IMS domain. After a call request (INVITE) message initiated by a calling IMS domain is sent to a CSCF in the called IMS domain, the called CSCF triggers a ring back tone platform based on initial filter criteria (initial filter criteria, iFC) subscription information of a user, and after receiving a called ringing message, the ring back tone platform plays an audio ring back tone or a video ring back tone to the calling user. After the ring back tone platform performs processing, a call message returns to the CSCF, and a subsequent call procedure is performed.

The calling terminal in the embodiments of this application may be referred to as a terminal or a terminal device, and may be a device with a wireless transceiving function. The terminal may be deployed on land, including indoor, outdoor, handheld, or vehicle-mounted, may be deployed on the water (for example, on a ship), or may be deployed in the air (for example, on an aircraft, on a balloon, and on a satellite). The terminal device may be user equipment (user equipment, UE). The UE includes a handheld device, vehicle-mounted device, wearable device, or computing device with a wireless communication function. For example, the UE may be a mobile phone (mobile phone), a tablet computer, or a computer with a wireless transceiving function. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In the embodiments of this application, an apparatus used to implement a function of a terminal may be a terminal, or may be an apparatus that can support the terminal in implementing the function, for example, a chip system. In the technical solutions provided in the embodiments of this application, an example in which the apparatus used to implement a function of a terminal is a terminal device is used to describe the technical solutions provided in the embodiments of this application.

The calling terminal in FIG. 1 in the embodiment of this application may be implemented by a device, or may be a functional module in a device. This is not specifically limited in the embodiments of this application. It may be understood that the foregoing function may be a network element in a hardware device, or may be a software function running on dedicated hardware, a virtualization function instantiated on a platform (for example, a cloud platform), or a chip system. In the embodiments of this application, the chip system may include a chip, or may include a chip and another discrete device.

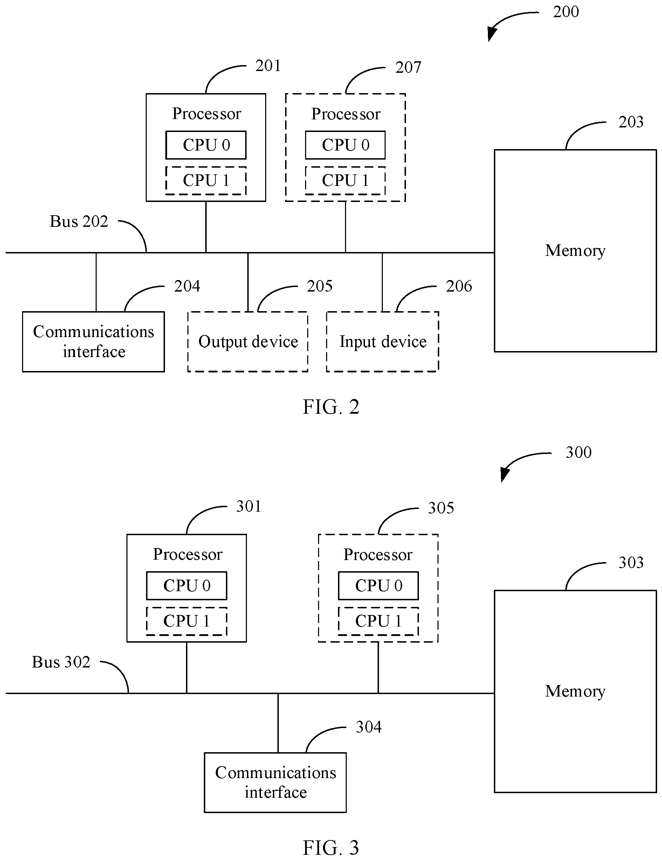

For example, an apparatus used to implement a function of the calling terminal provided in the embodiments of this application may be implemented by an apparatus 200 in FIG. 2. FIG. 2 is a schematic diagram of a hardware structure of the apparatus 200 according to an embodiment of this application. The apparatus 200 includes at least one processor 201, configured to implement the function of the calling terminal provided in the embodiments of this application. The apparatus 200 may further include a bus 202 and at least one communications interface 204. The apparatus 200 may further include a memory 203.

In this embodiment of this application, the processor may be a central processing unit (central processing unit, CPU), a general-purpose processor, a network processor (network processor, NP), a digital signal processor (DSP), a microprocessor, a microcontroller, a programmable logic device (programmable logic device, PLD), or any combination thereof. The processor may alternatively be any other apparatus with a processing function, for example, a circuit, a component, or a software module.

The bus 202 may be configured to transfer information between the foregoing components.

The communications interface 204 is configured to communicate with another device or a communications network, for example, an ethernet, a radio access network (radio access network, RAN), or a wireless local area network (WLAN). The communications interface 204 may be an interface, a circuit, a transceiver, or another apparatus that can implement communication. This is not limited in this application. The communications interface 204 may be coupled to the processor 201. Coupling in this embodiment of this application is indirect coupling or a communications connection between apparatuses, units, or modules, may be in an electrical, mechanical, or another form, and is used for information exchange between the apparatuses, the units, or the modules.

In this embodiment of this application, the memory may be a read-only memory (read-only memory, ROM) or another type of static storage device capable of storing static information and an instruction, a random access memory (random access memory, RAM) or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM), or other compact disc storage or optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of an instruction or a data structure and capable of being accessed by a computer, but is not limited thereto. The memory may exist independently, or may be coupled to the processor, for example, by using the bus 202. Alternatively, the memory may be integrated with the processor.

The memory 203 is configured to store a program instruction, and execution of the program instruction may be controlled by the processor 201, so as to implement video ring back tone interaction methods provided in the following embodiments of this application. The processor 201 is configured to invoke and execute the instruction stored in the memory 203, so as to implement video ring back tone interaction methods provided in the following embodiments of this application.

Optionally, a computer executable instruction in this embodiment of this application may also be referred to as application program code. This is not specifically limited in this embodiment of this application.

Optionally, the memory 203 may be included in the processor 201.

In specific implementation, in an embodiment, the processor 201 may include one or more CPUs, for example, a CPU 0 and a CPU 1 in FIG. 2.

In specific implementation, in an embodiment, the apparatus 200 may include a plurality of processors, for example, the processor 201 and a processor 207 in FIG. 2. Each of these processors may be a single-core processor, or may be a multi-coreprocessor. The processor herein may be one or more devices, circuits, and/or processing cores configured to process data (for example, a computer program instruction).

In specific implementation, in an embodiment, the apparatus 200 may further include an output device 205 and an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 is coupled to the processor 201, and may receive a user input in a plurality of manners. For example, the input device 206 may be a mouse, a keyboard, a touchscreen device, a sensing device, or the like.

The apparatus 200 may be a general-purpose device or a dedicated device. In specific implementation, the calling terminal 200 may be a portable computer, a network server, a personal digital assistant (PDA), a mobile phone, a tablet computer, a wireless calling terminal, an embedded device, or a device with a structure similar to that in FIG. 2. A type of the apparatus 200 is not limited in this embodiment of this application.

For example, an apparatus used to implement a function of the first server provided in the embodiments of this application may be implemented by an apparatus 300 in FIG. 3. FIG. 3 is a schematic diagram of a hardware structure of the apparatus 300 according to an embodiment of this application. The apparatus 300 includes at least one processor 301, configured to implement the function of the first server provided in the embodiments of this application. The apparatus 300 may further include a bus 302 and at least one communications interface 304. The apparatus 300 may further include a memory 303.

The bus 302 may be configured to transfer information between the foregoing components.

The communications interface 304 is configured to communicate with another device or a communications network, for example, an ethernet, a RAN, or a WLAN. The communications interface 304 may be an interface, a circuit, a transceiver, or another apparatus that can implement communication. This is not limited in this application. The communications interface 304 may be coupled to the processor 301.

The memory 303 is configured to store a program instruction, and execution of the program instruction may be controlled by the processor 301, so as to implement video ring back tone interaction methods provided in the following embodiments of this application. For example, the processor 301 is configured to invoke and execute the instruction stored in the memory 303, so as to implement video ring back tone interaction methods provided in the following embodiments of this application.

Optionally, the memory 303 may be included in the processor 301.

In specific implementation, in an embodiment, the processor 301 may include one or more CPUs, for example, a CPU 0 and a CPU 1 in FIG. 3.

In specific implementation, in an embodiment, the apparatus 300 may include a plurality of processors, for example, the processor 301 and a processor 305 in FIG. 3. Each of these processors may be a single-core processor, or may be a multi-core processor. The processor herein may be one or more devices, circuits, and/or processing cores configured to process data (for example, a computer program instruction).

For ease of understanding, the following specifically describes, with reference to the accompanying drawings, the video ring back tone interaction method provided in the embodiments of this application.

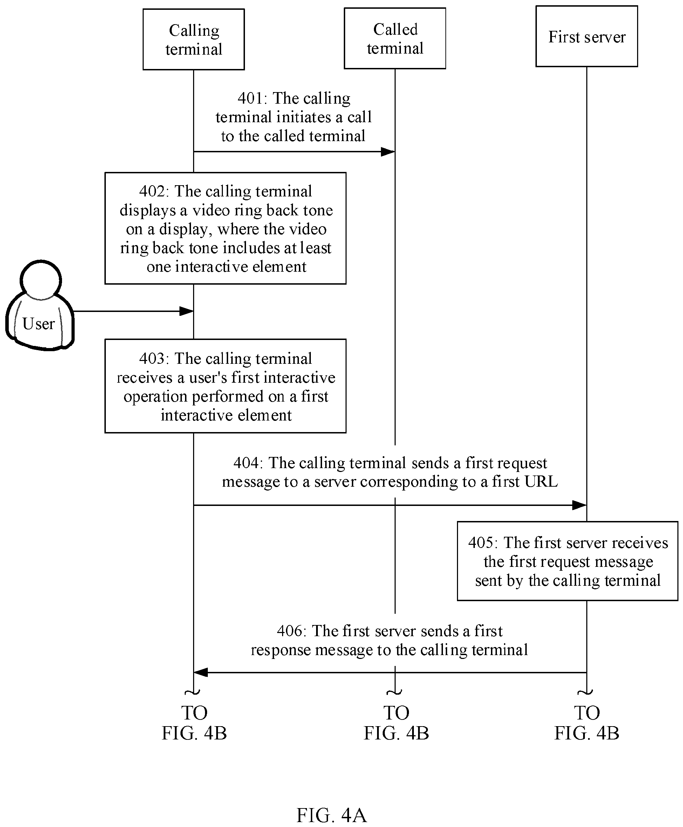

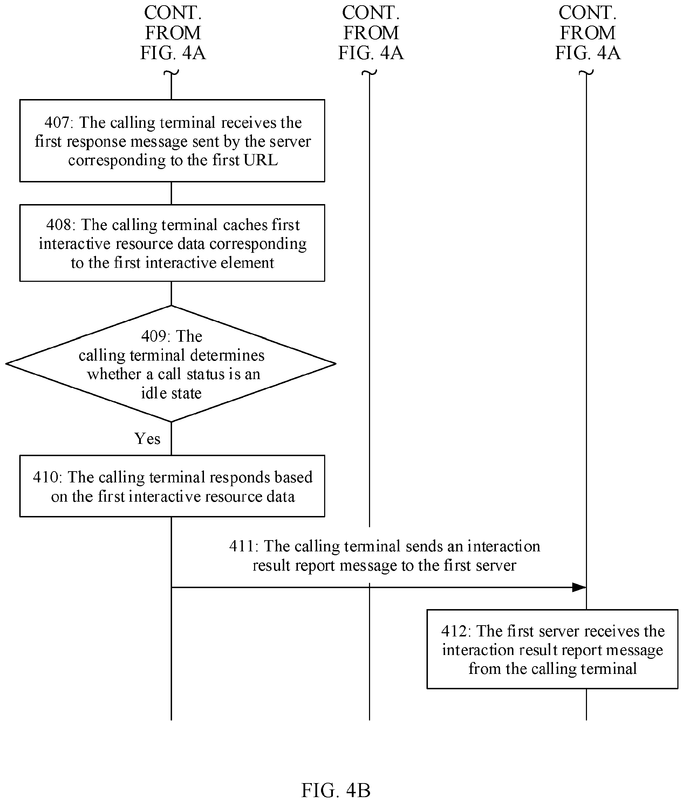

As shown in FIG. 4A and FIG. 4B, an embodiment of this application provides a video ring back tone interaction method, including the following steps:
401: A calling terminal initiates a call to a called terminal.

The calling terminal initiates the call to the called terminal. A ring back tone platform determines whether the called terminal has subscribed to a video ring back tone service. If the called terminal has subscribed to the video ring back tone service, the ring back tone platform sends video ring back tone media negotiation information to the calling terminal. The calling terminal determines a video media negotiation result based on the video ring back tone media negotiation information and media capability information of the calling terminal. The calling terminal sends the video media negotiation result to the ring back tone platform. The ring back tone platform performs video ring back tone playing based on the video media negotiation result, that is, transmits a video ring back tone media stream to the calling terminal. The video media negotiation result includes but is not limited to information about a video ring back tone media supported by the calling terminal, an IP address at which the calling terminal receives a video media, information about a video channel port, and video encoding/decoding information.

The calling terminal may initiate an audio call or a video call to the called terminal. It should be understood that if the calling terminal initiates an audio call to the called terminal, the ring back tone platform may determine, based on service control on a ring back tone service management side, whether the call meets a video media negotiation condition. If the call meets the video media negotiation condition, the ring back tone platform may change an audio media requested by the calling terminal to a video media.

402: The calling terminal displays a video ring back tone on a display, where the video ring back tone includes at least one interactive element.

The calling terminal may invoke a video player (that is, an app used to play a video) installed on the calling terminal to play the video ring back tone on the calling terminal, and display the video ring back tone (that is, the video ring back tone media stream) on the display of the calling terminal.

The video ring back tone includes one or more interactive elements. The interactive element is used to indicate that a user can perform an interactive operation. The interactive element may include a text box, password input, a text link, a radio box, a radio button, an image, a submit button, a clear button, a hidden area, a drop-down menu, a text input area, and the like.

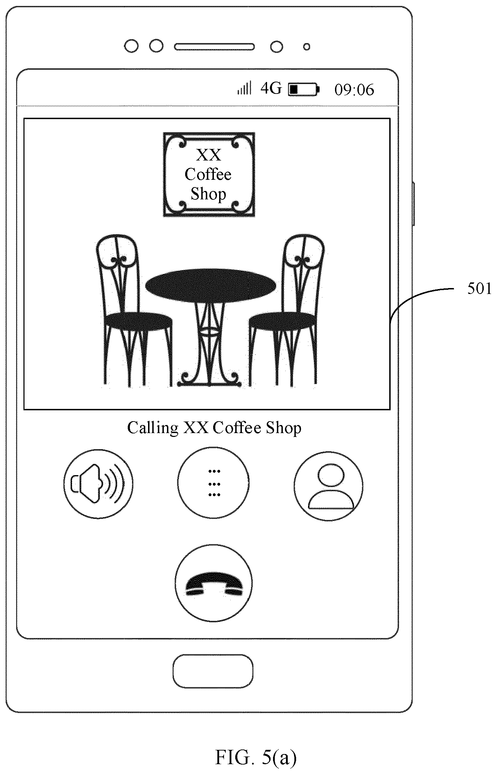

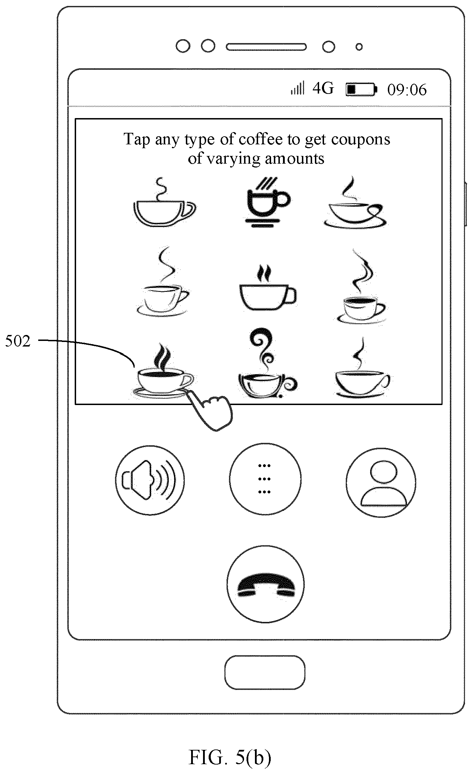

For example, as shown in FIG. 5(a), assuming that the calling terminal calls "XX Coffee Shop", the calling terminal may display, in a video ring back tone playing window 501, a video ring back tone introducing the coffee shop. It is assumed that a page of the video ring back tone is shown in FIG. 5(b). The page is used to introduce a plurality of types of coffee in the coffee shop, and an icon corresponding to each type of coffee may be an interactive element of an "image" type.

In a possible design, the interactive element may be customized by a video ring back tone operator for a specific video ring back tone. As shown in FIG. 5(b), for a video ring back tone corresponding to "XX Coffee Shop", the icon corresponding to each type of coffee is an interactive element. Such an interactive element is customized by the video ring back tone operator for "XX Coffee Shop".

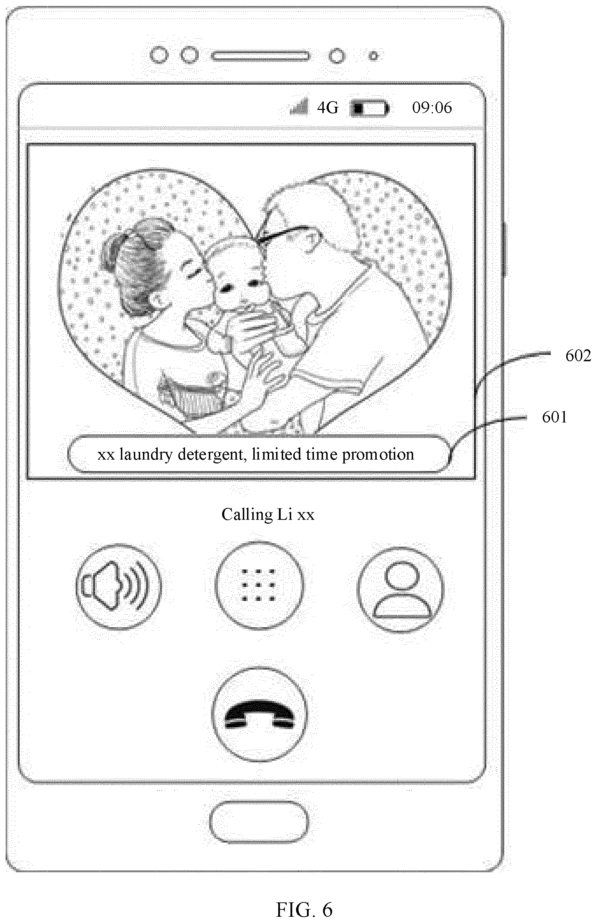

In a possible design, the interactive element may alternatively be independent of the video ring back tone media stream, and for example, may be superimposed on a video ring back tone playing window during playing of the video ring back tone. For example, as shown in FIG. 6, a text 601 ("xx laundry detergent, limited time promotion") is superimposed on a video ring back tone playing window 602 during playing of a video ring back tone corresponding to "Li XX".

403: The calling terminal receives a user's first interactive operation performed on a first interactive element, where the first interactive element corresponds to a first URL.

The calling terminal may receive an interactive operation such as tapping (single-tapping, double-tapping, or the like) or flicking performed by the user in an area in which the first interactive element is located. The first interactive element is any one of the at least one interactive element.

For example, as shown in FIG. 5(b), the user may tap any coffee icon on the page. For example, the user may tap a coffee icon 502.

404: The calling terminal sends a first request message to a server corresponding to the first URL.

The first request message is used to request first interactive resource data corresponding to the first interactive element of the video ring back tone. That is, the first request message is used to request the first interactive resource data. The first interactive resource data may include at least one of a text file (registration information), a graphic file (for example, a coupon), a sound file, an animation file, or a video file (for example, a movie trailer).

Optionally, after the calling terminal receives the user's first interactive operation performed on the first interactive element, the display of the calling terminal may provide the user, a choice whether to allow delayed interaction, that is, whether to allow the first interactive resource data to be presented on the calling terminal after the call ends. If the user chooses "Allow delayed interaction", the calling terminal sends the first request message to the server corresponding to the first URL.

In a possible design, a first server corresponding to the first URL may be a server related to the ring back tone platform. The first server may be managed by an operator that operates a video ring back tone. The first server may store interactive resource data corresponding to interactive elements of most video ring back tones registered with the ring back tone platform. Therefore, the first server may also be referred to as an interactive server, an interactive resource server, or the like. This is not limited in this application.

In another possible design, a first server corresponding to the first URL may alternatively be a server not related to the ring back tone platform. For example, the first server may be a dedicated server of "XX Coffee Shop". The dedicated server stores interactive resource data corresponding to some or all of interactive elements of the video ring back tone corresponding to "XX Coffee Shop".

Steps 405 and 406 are described by using an example in which the server corresponding to the first URL is the first server.

405: The first server receives the first request message sent by the calling terminal.

In a possible design, the first request message may include an ID of the video ring back tone and an ID of the first interactive element.

In another possible design, the first request message may include an ID of the video ring back tone, an ID of the first interactive element, and information about the calling user. The information about the calling user may include an ID of the user and real-time information of the user, for example, current location information, network information, and terminal battery level information. In this way, the interactive server may provide the calling user with more appropriate personalized interactive resource data based on the user information.

406: The first server sends a first response message to the calling terminal, where the first response message includes the first interactive resource data.

In a possible design, the first interactive resource data may be determined based on the ID of the video ring back tone and the ID of the first interactive element. For example, the first interactive resource data may be configured in the first server in advance by the video ring back tone operator based on the ID of the video ring back tone and the ID of the first interactive element.

For example, as shown in Table 1, it is assumed that if a 1# key is pressed during playing of a video ring back tone RBT000001, a coffee coupon coffe_coupon.png may be presented; and if a 2# key is pressed during playing of the video ring back tone RBT000001, a coffee ordering website whose URL is "http://www.irs.com/order_coffe.html" may be displayed, where the 1# key and the 2# key are interactive elements of the video ring back tone. It is assumed that if a button_1 is tapped during playing of a video ring back tone RBT000002, a third-party shopping website whose URL is "http://www.shop.com/dress1.html" may be displayed, where the button_1 is an interactive element of the video ring back tone.

**Table 1**

| ID of a video ring back tone | ID of a first interactive element | First URL | First interactive resource data |
|---|---|---|---|
| RBT000001 | Key 1# | http://www.irs.com/order_coff e coupon.html | coffe_coupon.png |
| | Key 2# | http://www.irs.com/order_coff e.html | Resource data corresponding to http://www.irs.com/order_coffe.html |
| RBT000002 | button_1 | http://www.shop.com/dres s1.html | Resource data corresponding to http://www.shop.com/dress1.html |

In other words, the key 1# of RBT000001 corresponds to resource data of the URL "http://www.irs.com/order_coffe coupon.html", that is, a graphic file (a coupon coffe_coupon.png); the key 2# of RBT000001 corresponds to the resource data of the URL "http://www.irs.com/order_coffe.html"; and the button_1 of RBT000002 corresponds to the resource data of the URL "http://www.shop.com/dress1.html".

In another possible design, the first interactive resource data may be determined based on the ID of the video ring back tone, the ID of the first interactive element, and information about the calling terminal. That is, the first interactive resource data may be customized for a user based on the ID of the video ring back tone, the ID of the first interactive element, and the information about the calling terminal. This can improve user experience.

For example, as shown in Table 2, it is assumed that if a 1# key is pressed during playing of a video ring back tone RBT000001, a coffee coupon coffe_coupon1.png, coffe_coupon2.png, or coffe_coupon3.png may be presented. That is, a video ring back tone ID (RBT000001) and an interactive element (the key 1#) jointly correspond to a plurality of coupons (coffe _coupon). The interactive server may select an available coupon of a shop closest to a location of the calling terminal based on the information about the calling user (for example, location information), and return the coupon to the calling terminal. For example, if the calling user is located in Longgang District of Shenzhen, coffe_coupon2.png may be returned to the calling user.

**Table 2**

| ID of a video ring back tone | ID of a first interactive element | Location information | First URL | First interactive resource data |
|---|---|---|---|---|
| RBT000001 | Key 1# | Nanshan District of Shenzhen | http://www.irs.com/order_coffe coupon1.html | coffe_coupon1.png |
| | | Longgang District of Shenzhen | http://www.irs.com/order_coffe coupon2.html | coffe_coupon2.png |
| | | Futian District of Shenzhen | http://www.irs.com/order_coffe coupon3.html | coffe_coupon3.png |

407: The calling terminal receives the first response message sent by the server corresponding to the first URL.

The calling terminal may receive the first response message sent by the first server, where the first response message includes the first interactive resource data.

408: The calling terminal caches the first interactive resource data corresponding to the first interactive element. After receiving the first response message, the calling terminal may cache the first interactive resource data in the first response message in the calling terminal, for example, may store the first interactive resource data in a CPU, a memory, or a storage card in the calling terminal.

409: The calling terminal determines whether a call status is an idle state.

After the calling terminal receives the user's first interactive operation performed on the first interactive element, the calling terminal may monitor whether the local call status is the idle state.

In a possible design, the calling terminal may proactively monitor the local call status. For example, assuming that the calling terminal uses an Android (Android) operating system, a call status interface TelephonyManager.java that can be monitored at an application layer and that is provided by the Android operating system may be called. If an obtained return value is CALL_STATE_IDLE, it indicates that the calling terminal is in an idle state, that is, the call ends or a callee does not answer, and the call times out. If an obtained return value is CALL_STATE_RINGING, it indicates that the calling terminal is in a ringing state or in a state in which an incoming call from a third party is waiting. If an obtained return value is CALL_STATE_OFFHOOK, it indicates that the calling terminal is in a state such as dialing, active, or holding.

In another possible design, the calling terminal may passively receive a notification indicating a local idle call state. For example, after receiving, by using a call module, a BYE message indicating that the called user hangs up, the calling terminal can determine that the call status is the idle state.

410: When the calling terminal determines that the call status is the idle state, the calling terminal responds based on the first interactive resource data.

That is, when the calling terminal learns, through monitoring, that the local call status is the idle state, or when the calling terminal receives a notification message, where the notification message is used to indicate that the local call status is the idle state, the calling terminal responds based on the first interactive resource data.

In a possible design, that the calling terminal responds based on the first interactive resource data may be that the calling terminal displays the first interactive resource data in a corresponding manner based on a type of the cached first interactive resource data. For example, if interactive resource data is a text file, for example, a phone number, a call app may be displayed, and the phone number may be entered; if interactive resource data is a picture file, for example, a coupon, the picture file may be opened by a picture app; or if interactive resource data is a video file, the video file may be opened by a video player.

411: The calling terminal sends an interaction result report message to the first server.

After responding to the first interactive resource data and exiting an interface/window that presents the first interactive resource data, the calling terminal may send the interaction result report message to the first server. The first interactive resource data may be obtained from the first server. This is not limited in this application.

In a possible design, the interaction result report message includes at least one of the ID of the video ring back tone, an ID of the calling terminal, an ID of the called terminal, the ID of the first interactive element, information about execution of the first interactive operation and the first interactive resource data (for example, whether a corresponding commodity is purchased, whether registration succeeds, or whether a corresponding coupon is saved), the information about the calling user (for example, the ID of the calling user), information about the called user (for example, an ID of the called user), and interaction duration.

412: The first server receives the interaction result report message from the calling terminal.

The first server may collect statistics based on the received interaction result report message. For example, the first server collects statistics on a quantity of times each video ring back tone is tapped, a tap rate of each video ring back tone, a completion rate of interactive resource data, interaction information of the calling user (what interactive operations were performed on which interactive elements), and the like within a period of time. This helps a video ring back tone operator or service provider run business.

It should be noted that step 401 to step 412 are not necessarily performed in a particular order, and an execution order of the steps is not specifically limited in this embodiment.

In this application, after receiving the user's interactive operation (the first interactive operation performed on the first interactive element) during playing of the video ring back tone, the calling terminal may cache corresponding interactive resource data (the first interactive resource data), and respond based on the interactive resource data after the call ends, thereby ensuring continuity of interaction between the calling user and the video ring back tone (especially comparatively time-consuming interaction with a video ring back tone advertisement) without affecting normal progress of the call. For the called user, the call also does not need to be postponed due to the caller's interaction with the video ring back tone, thereby resolving a problem of poor experience of interaction with a video ring back tone caused by an uncertain answer time. In addition, for the video ring back tone operator, the caller's interaction with the video ring back tone is not necessarily limited to a short period of time existing before the callee answers, and re-diversion is performed after the call ends, thereby increasing a completion rate of interaction with the video ring back tone.

In the foregoing embodiments provided in this application, the method provided in the embodiments of this application is described separately from perspectives of the calling terminal, the first server, and interaction between the calling terminal and the first server. To implement functions in the method provided in the foregoing embodiments of this application, the calling terminal and the first server may include a hardware structure and/or a software module, and implement the foregoing functions in a form of the hardware structure, the software module, or a combination of the hardware structure and the software module. Whether a specific function among the foregoing functions is performed in a manner of the hardware structure, the software module, or a combination of the hardware structure and the software module depends on particular applications and design constraints of the technical solutions.

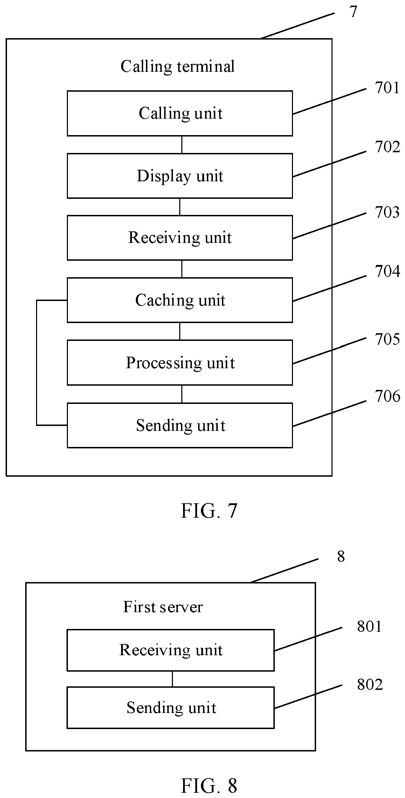

When each functional module is obtained through division based on each corresponding function, FIG. 7 is a possible schematic structural diagram of an apparatus 7 in the foregoing embodiments. The apparatus may be a calling terminal. The calling terminal includes a calling unit 701, a display unit 702, a receiving unit 703, a caching unit 704, a processing unit 705, and a sending unit 706. In this embodiment of this application, the calling unit 701 is configured to initiate a call to a called terminal; the display unit 702 is configured to display a video ring back tone on a display, where the video ring back tone includes at least one interactive element; the receiving unit 703 is configured to receive a user's first interactive operation performed on a first interactive element, where the first interactive element is any one of the at least one interactive element; the caching unit 704 is configured to cache first interactive resource data corresponding to the first interactive element; and the processing unit 705 is configured to: when determining that a call status is an idle state, respond based on the first interactive resource data. Optionally, the calling terminal may further include the sending unit 706. The sending unit 706 is configured to send a first request message to a server corresponding to a first URL, where the first request message is used to request the first interactive resource data. The receiving unit 703 is further configured to receive a first response message sent by the server corresponding to the first URL, where the first response message includes the first interactive resource data. In the method embodiment shown in FIG. 4A and FIG. 4B, the calling unit 701 may be configured to support the calling terminal in performing the process 401 in FIG. 4A; the display unit 702 may be configured to support the calling terminal in performing the process 402 in FIG. 4A; the receiving unit 703 may be configured to support the calling terminal in performing the processes 403 and 407 in FIG. 4A and FIG. 4B; the caching unit 704 may be configured to support the calling terminal in performing the process 408 in FIG. 4B; the processing unit 705 may be configured to support the calling terminal in performing the processes 409 and 410 in FIG. 4B; and the sending unit 706 may be configured to support the calling terminal in performing the processes 404 and 411 in FIG. 4A and FIG. 4B.

When each functional module is obtained through division based on each corresponding function, FIG. 8 is a possible schematic structural diagram of an apparatus 8 in the foregoing embodiments. The apparatus may be a first server. The first server includes a receiving unit 801 and a sending unit 802. The receiving unit 801 is configured to receive a first request message from a calling terminal, where the first request message is used to request first interactive resource data corresponding to a first interactive element of a video ring back tone; and the sending unit 802 is configured to send a first response message to the calling terminal, where the first response message includes the first interactive resource data; and the first interactive resource data is determined based on an identifier ID of the video ring back tone and an ID of the first interactive element, or the first interactive resource data is determined based on an ID of the video ring back tone, an ID of the first interactive element, and information about the calling terminal. In the method embodiment shown in FIG. 4A and FIG. 4B, the receiving unit 801 may be configured to support the first server in performing the processes 405 and 412 in FIG. 4A and FIG. 4B; and the sending unit 802 may be configured to support the first server in performing the process 406 in FIG. 4A.

Division into the modules in the embodiments of this application is an example, and is merely logical function division. There may be another division manner in actual implementation. In addition, function modules in the embodiments of this application may be integrated into one processor, or each of the modules may exist alone physically, or two or more modules may be integrated into one module. The integrated module may be implemented in a form of hardware, or may be implemented in a form of a software function module. For example, in the embodiments of this application, the receiving unit and the sending unit may be integrated into a transceiver unit.

All or some of the foregoing methods in the embodiments of this application may be implemented by using software, hardware, firmware, or any combination thereof. When software is used to implement the methods, the methods may be implemented completely or partially in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, solid-state drives (solid state drives, SSD)), or the like.

## Claims

1. A video ring back tone interaction method, comprising:
initiating (401), by a calling terminal, a call to a called terminal;
displaying (402), by the calling terminal, a video ring back tone on a display, wherein the video ring back tone comprises at least one interactive element;
receiving (403), by the calling terminal, a user's first interactive operation performed on a first interactive element, wherein the first interactive element is any one of the at least one interactive element;
caching (408), by the calling terminal, first interactive resource data corresponding to the first interactive element; and
responding (410), by the calling terminal, based on the first interactive resource data when the calling terminal determines that a call status is an idle state, wherein the call status is the idle state after a call ends, wherein the responding based on the first interactive resource data comprises displaying the first interactive resource data in a corresponding manner based on a type of the cached first interactive resource data.

2. The video ring back tone interaction method according to claim 1, wherein the first interactive element corresponds to a first uniform resource locator URL, and the caching (408), by the calling terminal, first interactive resource data comprises:
sending, by the calling terminal, a first request message to a server corresponding to the first URL, wherein the first request message is used to request the first interactive resource data;
receiving, by the calling terminal, a first response message sent by the server corresponding to the first URL, wherein the first response message comprises the first interactive resource data; and
caching, by the calling terminal, the first interactive resource data.

3. The video ring back tone interaction method according to claim 1 or 2, wherein the method further comprises:
sending (411), by the calling terminal, an interaction result report message to a first server, wherein the interaction result report message comprises at least one of an identifier ID of the video ring back tone, an ID of the calling terminal, an ID of the called terminal, an ID of the first interactive element, and information about execution of the first interactive operation and the first interactive resource data.

4. The video ring back tone interaction method according to any one of claims 1 to 3, wherein that the calling terminal determines that a call status is an idle state comprises:
the calling terminal learns, through monitoring, that the local call status is the idle state; or
the calling terminal receives a notification message, wherein the notification message is used to indicate that the local call status is the idle state.

5. The video ring back tone interaction method according to any one of claims 1 to 4, wherein
the first interactive resource data is determined based on the ID of the video ring back tone and the ID of the first interactive element; or
the first interactive resource data is determined based on the ID of the video ring back tone, the ID of the first interactive element, and information about the calling terminal.

6. The video ring back tone interaction method according to any one of claims 1 to 5, wherein the first interactive resource data comprises at least one of a text file, a graphic file, a sound file, an animation file, or a video file, and wherein the responding, by the calling terminal, based on the first interactive resource data comprises:
opening, by the calling terminal, at least one of the text file, the graphic file, the sound file, the animation file, or the video file in a corresponding opening manner.

7. The video ring back tone interaction method according to claim 2, further comprising:
receiving (405), by the first server, the first request message from the calling terminal; and
sending (406), by the first server, the first response message to the calling terminal, wherein the first response message comprises the first interactive resource data, and the first interactive resource data is determined based on an identifier ID of the video ring back tone and an ID of the first interactive element, or the first interactive resource data is determined based on an ID of the video ring back tone, an ID of the first interactive element, and information about the calling terminal.

8. The video ring back tone interaction method according to claim 7, wherein the method further comprises:
receiving, by the first server, an interaction result report message from the calling terminal, wherein the interaction result report message comprises at least one of the ID of the video ring back tone, an ID of the calling terminal, an ID of a called terminal, the ID of the first interactive element, and information about execution of a first interactive operation and the first interactive resource data.

9. A calling terminal, comprising:
a calling unit (701), configured to initiate a call to a called terminal;
a display unit (702), configured to display a video ring back tone on a display, wherein the video ring back tone comprises at least one interactive element;
a receiving unit (703), configured to receive a user's first interactive operation performed on a first interactive element, wherein the first interactive element is any one of the at least one interactive element;
a caching unit (704), configured to cache first interactive resource data corresponding to the first interactive element; and
a processing unit (705), configured to respond based on the first interactive resource data when determining that a call status is an idle state, wherein the call status is the idle state after a call ends, wherein the responding based on the first interactive resource data comprises displaying the first interactive resource data in a corresponding manner based on a type of the cached first interactive resource data.

10. The calling terminal according to claim 9, wherein the first interactive element corresponds to a first uniform resource locator URL, and the caching unit (704) is configured to:
send, by using a sending unit (706), a first request message to a server corresponding to the first URL, wherein the first request message is used to request the first interactive resource data;
receive, by using the receiving unit (703), a first response message sent by the server corresponding to the first URL, wherein the first response message comprises the first interactive resource data; and
cache the first interactive resource data.

11. The calling terminal according to claim 9 or 10, wherein the sending unit (706) is further configured to:
send an interaction result report message to a first server, wherein the interaction result report message comprises at least one of an identifier ID of the video ring back tone, an ID of the calling terminal, an ID of the called terminal, an ID of the first interactive element, and information about execution of the first interactive operation and the first interactive resource data.

12. The calling terminal according to any one of claims 9 to 11, wherein the processing unit (705) is configured to:
learn, through monitoring, that the local call status is the idle state; or
receive a notification message by using the receiving unit (703), wherein the notification message is used to indicate that the local call status is the idle state.

13. The calling terminal according to any one of claims 9 to 12, wherein
the first interactive resource data is determined based on the ID of the video ring back tone and the ID of the first interactive element; or
the first interactive resource data is determined based on the ID of the video ring back tone, the ID of the first interactive element, and information about the calling terminal.

14. The calling terminal according to any one of claims 9 to 13, wherein the first interactive resource data comprises at least one of a text file, a graphic file, a sound file, an animation file, or a video file and the processing unit (705) is configured to:
open at least one of the text file, the graphic file, the sound file, the animation file, or the video file in a corresponding opening manner.

15. A readable storage medium, comprising a program or an instruction, wherein when the program or the instruction is executed, the video ring back tone interaction method according to any one of claims 1 to 8 is implemented.

## Patentansprüche

1. Videorückruftoninteraktionsverfahren, das Folgendes umfasst:
Initiieren (401), durch Anrufen eines Endgeräts, eines Anrufs an ein angerufenes Endgerät,
Anzeigen (402), durch das anrufende Endgerät, eines Videorückruftons auf einer Anzeige, wobei der Videorückrufton mindestens ein interaktives Element umfasst;
Empfangen (403), durch das anrufende Endgerät, einer ersten interaktiven Operation eines Benutzers, durchgeführt an einem ersten interaktiven Element, wobei das erste interaktive Element ein beliebiges des mindestens einen interaktiven Elements ist;
Cachen (408), durch das anrufende Endgerät, erster interaktiver Ressourcendaten, die dem ersten interaktiven Element entsprechen; und
Antworten (410), durch das anrufende Endgerät, basierend auf den ersten interaktiven Ressourcendaten, wenn das anrufende Endgerät bestimmt, dass ein Anrufstatus ein inaktiver Zustand ist, wobei der Anrufstatus der inaktive Zustand ist, nachdem der Anruf endet, wobei das Antworten basierend auf den ersten interaktiven Ressourcendaten Anzeigen der ersten interaktiven Ressourcendaten auf entsprechende Weise basierend auf einer Art der gecachten ersten interaktiven Ressourcendaten umfasst.

2. Videorückruftoninteraktionsverfahren nach Anspruch 1, wobei das erste interaktive Element einem ersten "Uniform Resource Locator", URL, entspricht und das Cachen (408), durch das anrufende Endgerät, erster interaktiver Ressourcendaten Folgendes umfasst:
Senden, durch das anrufende Endgerät, einer ersten Anforderungsnachricht an einen dem ersten URL entsprechenden Server, wobei die erste Anforderungsnachricht zum Anfordern der ersten interaktiven Ressourcendaten verwendet wird,
Empfangen, durch das anrufende Endgerät, einer durch den dem ersten URL entsprechenden Server gesendeten ersten Antwortnachricht, wobei die erste Antwortnachricht die ersten interaktiven Ressourcendaten umfasst; und
Cachen, durch das anrufende Endgerät, der ersten interaktiven Ressourcendaten.

3. Videorückruftoninteraktionsverfahren nach Anspruch 1 oder 2, wobei das Verfahren ferner Folgendes umfasst:
Senden (411), durch das anrufende Endgerät, einer Interaktionsergebnismeldungsnachricht an einen ersten Server, wobei die Interaktionsergebnismeldungsnachricht eine Kennung ID des Videorückruftons und/oder eine ID des anrufenden Endgeräts und/oder eine ID des angerufenen Endgeräts und/oder eine ID des ersten interaktiven Elements und/oder Informationen über eine Ausführung der ersten interaktiven Operation und der ersten interaktiven Ressourcendaten umfasst.

4. Videorückruftoninteraktionsverfahren nach einem der Ansprüche 1 bis 3, wobei dass das anrufende Endgerät bestimmt, dass ein Anrufstatus ein inaktiver Zustand ist, Folgendes umfasst:
das anrufende Endgerät erfährt mittels Überwachen, dass der lokale Anrufstatus der inaktive Zustand ist; oder
das anrufende Endgerät empfängt eine Benachrichtigungsnachricht, wobei die Benachrichtigungsnachricht dazu verwendet wird, anzugeben, dass der lokale Anrufstatus der inaktive Zustand ist.

5. Videorückruftoninteraktionsverfahren nach einem der Ansprüche 1 bis 4, wobei
die ersten interaktiven Ressourcendaten basierend auf der ID des Videorückruftons und der ID des ersten interaktiven Elements bestimmt werden; oder
die ersten interaktiven Ressourcendaten basierend auf der ID des Videorückruftons, der ID des ersten interaktiven Elements und Informationen über das anrufende Endgerät bestimmt werden.

6. Videorückruftoninteraktionsverfahren nach einem der Ansprüche 1 bis 5, wobei die ersten interaktiven Ressourcendaten eine Textdatei und/oder eine Grafikdatei und/oder eine Tondatei und/oder eine Animationsdatei und/oder eine Videodatei umfassen, und wobei das Antworten, durch das anrufende Endgerät, basierend auf den ersten interaktiven Ressourcendaten Folgendes umfasst:
Öffnen, durch das anrufende Endgerät, der Textdatei und/oder der Grafikdatei und/oder der Tondatei und/oder der Animationsdatei und/oder der Videodatei auf eine entsprechende Öffnungsweise.

7. Videorückruftoninteraktionsverfahren nach Anspruch 2, das ferner Folgendes umfasst:
Empfangen (405), durch den ersten Server, der ersten Anforderungsnachricht von dem anrufenden Endgerät; und
Senden (406), durch den ersten Server, der ersten Antwortnachricht an das anrufende Endgerät, wobei die erste Antwortnachricht die ersten interaktiven Ressourcendaten umfasst und die ersten interaktiven Ressourcendaten basierend auf einer Kennung ID des Videorückruftons und einer ID des ersten interaktiven Elements bestimmt werden oder die ersten interaktiven Ressourcendaten basierend auf einer ID des Videorückruftons, einer ID des ersten interaktiven Elements und Informationen über das anrufende Endgerät bestimmt werden.

8. Videorückruftoninteraktionsverfahren nach Anspruch 7, wobei das Verfahren ferner Folgendes umfasst:
Empfangen, durch den ersten Server, einer Interaktionsergebnismeldungsnachricht von dem anrufenden Endgerät, wobei die Interaktionsergebnismeldungsnachricht die ID des Videorückruftons und/oder eine ID des anrufenden Endgeräts und/oder eine ID des angerufenen Endgeräts und/oder die ID des ersten interaktiven Elements und/oder Informationen über eine Ausführung einer ersten interaktiven Operation und der ersten interaktiven Ressourcendaten umfasst.

9. Anrufendes Endgerät, das Folgendes umfasst:
eine Anrufeinheit (701), ausgelegt zum Initiieren eines Anrufs an ein angerufenes Endgerät,
eine Anzeigeeinheit (702), ausgelegt zum Anzeigen eines Videorückruftons auf einer Anzeige, wobei der Videorückrufton mindestens ein interaktives Element umfasst;
eine Empfangseinheit (703), ausgelegt zum Empfangen einer ersten interaktiven Operation eines Benutzers, durchgeführt an einem ersten interaktiven Element, wobei das erste interaktive Element ein beliebiges des mindestens einen interaktiven Elements ist;
eine Cacheeinheit (704), ausgelegt zum Cachen erster interaktiver Ressourcendaten, die dem ersten interaktiven Element entsprechen; und
eine Verarbeitungseinheit (705), ausgelegt zum Antworten, basierend auf den ersten interaktiven Ressourcendaten, wenn bestimmt wird, dass ein Anrufstatus ein inaktiver Zustand ist, wobei der Anrufstatus der inaktive Zustand ist, nachdem der Anruf endet,
wobei das Antworten basierend auf den ersten interaktiven Ressourcendaten Anzeigen der ersten interaktiven Ressourcendaten auf entsprechende Weise basierend auf einer Art der gecachten ersten interaktiven Ressourcendaten umfasst.

10. Anrufendes Endgerät nach Anspruch 9, wobei das erste interaktive Element einem ersten "Uniform Resource Locator", URL, entspricht und die Cacheeinheit (704) zu Folgendem ausgelegt ist:
Senden, unter Verwendung einer Sendeeinheit (706), einer ersten Anforderungsnachricht an einen dem ersten URL entsprechenden Server, wobei die erste Anforderungsnachricht zum Anfordern der ersten interaktiven Ressourcendaten verwendet wird,
Empfangen, unter Verwendung der Empfangseinheit (703), einer durch den dem ersten URL entsprechenden Server gesendeten ersten Antwortnachricht, wobei die erste Antwortnachricht die ersten interaktiven Ressourcendaten umfasst; und
Cachen der ersten interaktiven Ressourcendaten.

11. Anrufendes Endgerät nach Anspruch 9 oder 10, wobei die Sendeeinheit (706) ferner zu Folgendem ausgelegt ist:
Senden einer Interaktionsergebnismeldungsnachricht an einen ersten Server, wobei die Interaktionsergebnismeldungsnachricht eine Kennung ID des Videorückruftons und/oder eine ID des anrufenden Endgeräts und/oder eine ID des angerufenen Endgeräts und/oder eine ID des ersten interaktiven Elements und/oder Informationen über eine Ausführung der ersten interaktiven Operation und der ersten interaktiven Ressourcendaten umfasst.

12. Anrufendes Endgerät nach einem der Ansprüche 9 bis 11, wobei die Verarbeitungseinheit (705) zu Folgendem ausgelegt ist:
Erfahren, mittels Überwachen, dass der lokale Anrufstatus der inaktive Zustand ist; oder
Empfangen einer Benachrichtigungsnachricht unter Verwendung der Empfangseinheit (703), wobei die Benachrichtigungsnachricht dazu verwendet wird, anzugeben, dass der lokale Anrufstatus der inaktive Zustand ist.

13. Anrufendes Endgerät nach einem der Ansprüche 9 bis 12, wobei
die ersten interaktiven Ressourcendaten basierend auf der ID des Videorückruftons und der ID des ersten interaktiven Elements bestimmt werden; oder
die ersten interaktiven Ressourcendaten basierend auf der ID des Videorückruftons, der ID des ersten interaktiven Elements und Informationen über das anrufende Endgerät bestimmt werden.

14. Anrufendes Endgerät nach einem der Ansprüche 9 bis 13, wobei die ersten interaktiven Ressourcendaten eine Textdatei und/oder eine Grafikdatei und/oder eine Tondatei und/oder eine Animationsdatei und/oder eine Videodatei umfassen, und die Verarbeitungseinheit (705) zu Folgendem ausgelegt ist:
Öffnen der Textdatei und/oder der Grafikdatei und/oder der Tondatei und/oder der Animationsdatei und/oder der Videodatei auf eine entsprechende Öffnungsweise.

15. Lesbares Speichermedium, das ein Programm oder eine Anweisung umfasst, wobei bei Ausführung des Programms oder der Anweisung das Videorückruftoninteraktionsverfahren nach einem der Ansprüche 1 bis 8 implementiert wird.

## Revendications

1. Procédé d'interaction avec une tonalité de retour d'appel vidéo, comprenant :
le lancement (401), par un terminal appelant, d'un appel à destination d'un terminal appelé ;
l'affichage (402), par le terminal appelant, d'une tonalité de retour d'appel vidéo sur un affichage, la tonalité de retour d'appel vidéo comprenant au moins un élément interactif ;
la réception (403), par le terminal appelant, d'une première opération interactive d'un utilisateur réalisée sur un premier élément interactif, le premier élément interactif étant l'un quelconque de l'au moins un élément interactif ;
la mise en cache (408), par le terminal appelant, de premières données de ressources interactives correspondant au premier élément interactif ; et
la réponse (410), par le terminal appelant, sur la base des premières données de ressources interactives lorsque le terminal appelant détermine qu'un statut d'appel est un état inactif, le statut d'appel étant l'état inactif une fois qu'un appel a pris fin, la réponse sur la base des premières données de ressources interactives comprenant l'affichage des premières données de ressources interactives dans un mode correspondant sur la base d'un type des premières données de ressources interactives mises en cache.

2. Procédé d'interaction avec une tonalité de retour d'appel vidéo selon la revendication 1, dans lequel le premier élément interactif correspond à un premier localisateur uniforme de ressources, URL, et la mise en cache (408), par le terminal appelant, de premières données de ressources interactives comprend :
l'envoi, par le terminal appelant, d'un premier message de demande à un serveur correspondant au premier URL, le premier message de demande servant à demander les premières données de ressources interactives ;
la réception, par le terminal appelant, d'un premier message de réponse envoyé par le serveur correspondant au premier URL, le premier message de réponse comprenant les premières données de ressources interactives ; et
la mise en cache, par le terminal appelant, des premières données de ressources interactives.

3. Procédé d'interaction avec une tonalité de retour d'appel vidéo selon la revendication 1 ou 2, le procédé comprenant en outre :
l'envoi (411), par le terminal appelant, d'un message de rapport de résultat d'interaction à un premier serveur, le message de rapport de résultat d'interaction comprenant un identifiant, ID, de la tonalité de retour d'appel vidéo et/ou un ID du terminal appelant et/ou un ID du terminal appelé et/ou un ID du premier élément interactif et/ou des informations concernant l'exécution de la première opération interactive et les premières données de ressources interactives.

4. Procédé d'interaction avec une tonalité de retour d'appel vidéo selon l'une quelconque des revendications 1 à 3, dans lequel la détermination, par le terminal appelant, qu'un statut d'appel est un état inactif comprend :
la découverte, par le terminal appelant, par le biais d'une surveillance, que le statut d'appel local est l'état inactif ; ou
la réception, par le terminal appelant, d'un message de notification, le message de notification servant à indiquer que le statut d'appel local est l'état inactif.

5. Procédé d'interaction avec une tonalité de retour d'appel vidéo selon l'une quelconque des revendications 1 à 4, dans lequel
les premières données de ressources interactives sont déterminées sur la base de l'ID de la tonalité de retour d'appel vidéo et de l'ID du premier élément interactif ; ou
les premières données de ressources interactives sont déterminées sur la base de l'ID de la tonalité de retour d'appel vidéo, de l'ID du premier élément interactif et d'informations concernant le terminal appelant.

6. Procédé d'interaction avec une tonalité de retour d'appel vidéo selon l'une quelconque des revendications 1 à 5, dans lequel les premières données de ressources interactives comprennent un fichier texte et/ou un fichier graphique et/ou un fichier audio et/ou un fichier d'animation et/ou un fichier vidéo, et dans lequel la réponse, par le terminal appelant, sur la base des premières données de ressources interactives comprend :
l'ouverture, par le terminal appelant, du fichier texte et/ou du fichier graphique et/ou du fichier audio et/ou du fichier d'animation et/ou du fichier vidéo dans un mode d'ouverture correspondant.

7. Procédé d'interaction avec une tonalité de retour d'appel vidéo selon la revendication 2, comprenant en outre :
la réception (405), par le premier serveur, du premier message de demande en provenance du terminal appelant ; et
l'envoi (406), par le premier serveur, du premier message de réponse au terminal appelant, le premier message de réponse comprenant les premières données de ressources interactives, et les premières données de ressources interactives étant déterminées sur la base d'un identifiant, ID, de la tonalité de retour d'appel vidéo et d'un ID du premier élément interactif, ou les premières données de ressources interactives étant déterminées sur la base d'un ID de la tonalité de retour d'appel vidéo, d'un ID du premier élément interactif et d'informations concernant le terminal appelant.

8. Procédé d'interaction avec une tonalité de retour d'appel vidéo selon la revendication 7, le procédé comprenant en outre :
la réception, par le premier serveur, d'un message de rapport de résultat d'interaction en provenance du terminal appelant, le message de rapport de résultat d'interaction comprenant l'ID de la tonalité de retour d'appel vidéo et/ou un ID du terminal appelant et/ou un ID d'un terminal appelé et/ou l'ID du premier élément interactif et/ou des informations concernant l'exécution d'une première opération interactive et les premières données de ressources interactives.

9. Terminal appelant, comprenant :
une unité d'appel (701), configurée pour lancer un appel à destination d'un terminal appelé ;
une unité d'affichage (702), configurée pour afficher une tonalité de retour d'appel vidéo sur un affichage, la tonalité de retour d'appel vidéo comprenant au moins un élément interactif ;
une unité de réception (703), configurée pour recevoir une première opération interactive d'un utilisateur réalisée sur un premier élément interactif, le premier élément interactif étant l'un quelconque de l'au moins un élément interactif ;
une unité de mise en cache (704), configurée pour mettre en cache des premières données de ressources interactives correspondant au premier élément interactif ; et
une unité de traitement (705), configurée pour répondre sur la base des premières données de ressources interactives en cas de détermination qu'un statut d'appel est un état inactif, le statut d'appel étant l'état inactif une fois qu'un appel a pris fin, la réponse sur la base des premières données de ressources interactives comprenant l'affichage des premières données de ressources interactives dans un mode correspondant sur la base d'un type des premières données de ressources interactives mises en cache.

10. Terminal appelant selon la revendication 9, dans lequel le premier élément interactif correspond à un premier localisateur uniforme de ressources, URL, et l'unité de mise en cache (704) est configurée pour :
envoyer, au moyen d'une unité d'envoi (706), un premier message de demande à un serveur correspondant au premier URL, le premier message de demande servant à demander les premières données de ressources interactives ;
recevoir, au moyen d'une unité de réception (703), un premier message de réponse envoyé par le serveur correspondant au premier URL, le premier message de réponse comprenant les premières données de ressources interactives ; et
mettre en cache les premières données de ressources interactives.

11. Terminal appelant selon la revendication 9 ou 10, dans lequel l'unité d'envoi (706) est configurée en outre pour :
envoyer un message de rapport de résultat d'interaction à un premier serveur, le message de rapport de résultat d'interaction comprenant un identifiant, ID, de la tonalité de retour d'appel vidéo et/ou un ID du terminal appelant et/ou un ID du terminal appelé et/ou un ID du premier élément interactif et/ou des informations concernant l'exécution de la première opération interactive et les premières données de ressources interactives.

12. Terminal appelant selon l'une quelconque des revendications 9 à 11, dans lequel l'unité de traitement (705) est configurée pour :
découvrir, par le biais d'une surveillance, que le statut d'appel local est l'état inactif ; ou
recevoir un message de notification au moyen de l'unité de réception (703), le message de notification servant à indiquer que le statut d'appel local est l'état inactif.

13. Terminal appelant selon l'une quelconque des revendications 9 à 12, dans lequel
les premières données de ressources interactives sont déterminées sur la base de l'ID de la tonalité de retour d'appel vidéo et de l'ID du premier élément interactif ; ou
les premières données de ressources interactives sont déterminées sur la base de l'ID de la tonalité de retour d'appel vidéo, de l'ID du premier élément interactif et d'informations concernant le terminal appelant.

14. Terminal appelant selon l'une quelconque des revendications 9 à 13, dans lequel les premières données de ressources interactives comprennent un fichier texte et/ou un fichier graphique et/ou un fichier audio et/ou un fichier d'animation et/ou un fichier vidéo, et l'unité de traitement (705) est configurée pour :
ouvrir le fichier texte et/ou le fichier graphique et/ou le fichier audio et/ou le fichier d'animation et/ou le fichier vidéo dans un mode d'ouverture correspondant.

15. Support de stockage lisible, comprenant un programme ou une instruction dont l'exécution met en oeuvre le procédé d'interaction avec une tonalité de retour d'appel vidéo selon l'une quelconque des revendications 1 à 8.
